Europäisches Patentamt

(19) European Patent Office

Office européen des brevets

(11) Publication number: **0 242 037 B1**

(12) **EUROPEAN PATENT SPECIFICATION**

(45) Date of publication of patent specification:
27.03.91 Bulletin 91/13

(51) Int. Cl.⁵: **E05D 1/02,** C08K 5/54,
C08L 59/00, C08L 67/00,
C08L 77/00

(21) Application number: 87301940.0

(22) Date of filing: 05.03.87

(54) **Hinge parts.**

(30) Priority: 07.03.86 JP 50194/86

(43) Date of publication of application:
21.10.87 Bulletin 87/43

(45) Publication of the grant of the patent:
27.03.91 Bulletin 91/13

(84) Designated Contracting States:
AT BE CH DE ES FR GB GR IT LI LU NL SE

(56) References cited:
EP-A- 0 043 657
DE-A- 2 736 933
DE-U- 8 516 467
GB-A- 1 106 128
US-A- 4 414 705
US-A- 4 463 046

(73) Proprietor: POLYPLASTICS CO. LTD.
30 Azuchimachi 2-chome
Higashi-ku Osaka-shi (JP)

(72) Inventor: Takagaki, Hitohisa
324, Miyashita,
Fuji-shi Shizuoka (JP)
Inventor: Iiyama, Makoto
338-6, Yuzuki
Fuji-shi Shizuoka (JP)

(74) Representative: Livsey, Gilbert Charlesworth
Norris et al
HYDE, HEIDE & O'DONNELL 10-12 Priests
Bridge
London SW15 5JE (GB)

EP 0 242 037 B1

Jouve, 18, rue Saint-Denis, 75001 PARIS

## Description

The present invention relates to hinge parts having an excellent hinge characteristic, which find use as hinge parts in the fields of sundry goods, building materials, automobiles, electric applications, etc.

Brief Description of the Drawings :

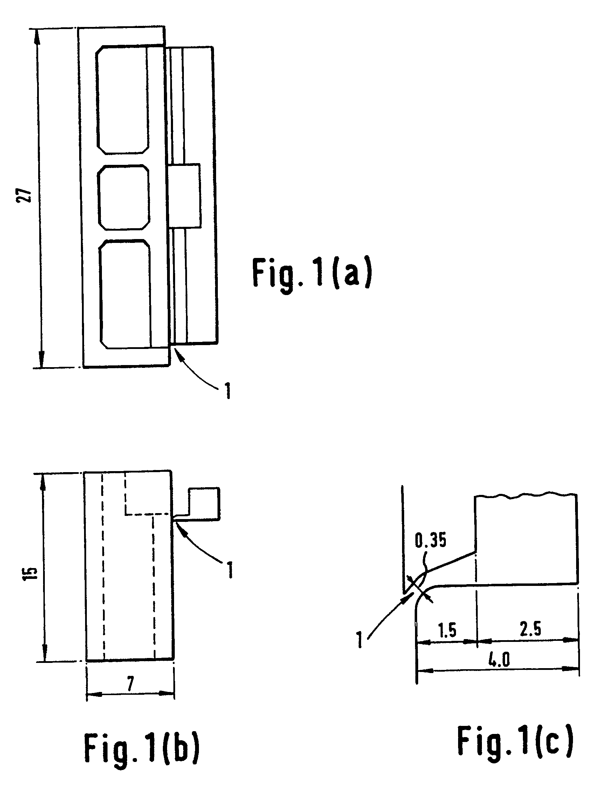

Fig. 1 is a schematic sketch of a test piece used in the measurement of the hinge characteristic, Fig. 1(a), (b) and (c) showing a plan view, a side view and an expanded view of the hinge portion, respectively. In these drawings, numeral 1 represents the hinge portion. Other numerals give dimensions in mm units.

The hinge part herein mentioned is, for example, one as shown in Fig. 1 ; the thin portion of the part on which a bending or folding load is imposed once or more often is called the hinge (indicated by 1 in the figure). The shape of hinge is not particularly restricted ; it may be in the shape of either sheet, band or string, etc. The thickness and length of hinge are not specified ; anything which substantially discharges the function of a hinge may be included in the hinge parts of this invention.

Throughout the description of this specification, the "hinge characteristic" is defined as the durability of such a hinge as above-mentioned under a single or more frequent bending or folding load.

Statement of Prior Art

Thermoplastic resins, because of their high workability, are recently finding uses in a very wide range of fields, taking the place of metals. Of these resins, thermoplastic polyester resins, polyacetal resins, polyamide resins, etc., because of their excellent physical and chemical characteristics, are widely utilized as mechanism parts of automobiles, electric and electronic equipment, precision machinery, building materials, sundry goods, etc. In these fields, however, further special properties are often required. As one of such special properties a hinge characteristic is sometimes required.

Patent document DE-A-2736933 upon which the prior art portion of Claim 1 is based disclose a method for producing hinge parts comprising plates of a thermoplastic resin such as polyethylene, polypropylene, polyamide, polyester or acetal resin. It teaches that a hinge can be formed in such resin materials by simply folding the respective plate portions to an angle of more than 90°, in contrast to prior proposals which required a weakening of the resin material by gouging or perforating along the folding line.

It is also known to enhance the hinge characteristic of thermoplastic resins by addition thereto of some rubbery material. This method, however, does not necessarily meet other strict requirements and various other properties are often degraded.

The present invention has as its object the provision of hinge parts having the defined hinge characteristic improved over conventional parts but without impairing other properties.

Summary of the Invention

This invention relates to hinge parts having an excellent hinge characteristic which are molded of compositions obtained by adding organopolysiloxane to thermoplastic resins.

According to the invention there is provided a hinge part comprising first and second elements and a thin portion therebetween subjected to a bending or folding load, said first and second elements and thin portion being formed of a thermoplastic resin, characterized in that the hinge part comprises in addition one or more organopolysiloxanes each having a viscosity of $5 \times 10^{-7}$ to 1 m²/s (0.5 to 1,000,000 cSt), said organopolysiloxane(s) being present in a total weight of 0.05 to 30% by weight based on the weight of resin plus organopolysiloxane(s).

The thermoplastic resins used according to this invention are not particularly limited, but if still wider uses are to be taken into account, polyester (polyalkylene terephthalate or wholly aromatic polyester) resins, polyacetal resins, polyamide resins, etc., which are excellent in the balance of such properties as mechanical, electrical, thermal, chemical and other properties and which are excellent also in workability, are preferable. The resins may alternatively be denatured resins with the aforementioned resins as their main component(s) and containing other thermoplastic resins, elastomers, etc., as auxiliary components.

The said thermoplastic resins are generally appropriate as hinge parts in various properties, as hereabove mentioned ; but strictly speaking, they have respectively different characteristics, so that arbitrary selective use may be made of them to meet the for performance and use requirements. Thermoplastic polyester resins or polyacetal resins, or thermoplastic resins with these as their main body have excellent hinge characteristics and these resins are particularly well suited even where other general properties would count. Of the thermoplastic polyester resins, polybutylene terephthalate resin is particularly preferable.

The organopolysiloxanes are liquid and oily substances with viscosities $5 \times 10^{-7}$ to 1 m²/s (0.5 to 1,000,000 cSt), those with viscosities $5 \times 10^{-4}$ to 1 m²/s (500 to 1,000,000 cSt) being preferable for considerations of workability. Examples of such organopolysiloxanes include dimethyl polysiloxane, phenylmethyl polysiloxane, fluorine-denatured polysiloxane, alkyl-denatured polysiloxane, polysiloxane, polyether-denatured polysiloxane, epoxy-denatured polysiloxane, alcohol-denatured polysioxane, etc. One or two or more members of them may be used. The total amount of these organopolysiloxanes added should be 0.05-30% by weight of the total composition.

With amounts smaller than this range, an adequate hinge characteristic cannot be obtained, but amounts larger than the range sometimes invite reduction in workability and a large decline in physical properties. If the hinge characteristic and other physical properties and workability are taken into account, the addition should preferably be in the range of 0.3-10% by weight.

In the compositions for forming the hinge parts of this invention, various types of well-known additives may be further mixed for improvement of their properties to serve respective ends. Examples of additives include antioxidants, weather and light resistance stabilizers, heat resistance stabilizers, lubricants, mold releasers, nucleators, antistatic agents, and other surface active agents, colorants and fibrous, plate shape or powdery or grainy (spherical) inorganic fillers, etc., such as glass fiber, glass flake, glass beads, mica, talc, potassium carbonate, etc. Use of greases, emulsions and dispersions, etc., prepared by adding thickeners, dispersants, etc., to organosiloxanes is also feasible.

The hinge parts of this invention may be readily obtained by the well-known manufacturing methods and molding methods which are hitherto used with resins, etc., into which some additives are mixed. For example, either one of the following three methods is usable : i) a method which comprises mixing respective components and then, kneading the mixture into and extruding it from an extruder, thereby preparing pellets, followed by molding them, ii) a method which comprises preparing pellets differing in composition, mixing them and molding the mixture at the time of molding, yielding the mold of this composition, and iii) a method which comprises charging respective components directly into the mold, to be molded at the time of molding, yielding the mold of the invention's composition.

(Effect of the Invention)

The hinge parts formed of compositions hereabove described show excellent hinge characteristic without causing such disadvantage as degradation of other properties to the extent of raising problems in practical use.

The cause of the effect attained by the composition of this invention, although not clear, is believed to result from multiplexing of various causes that the relaxation takes place in the mold, particularly at the hinge portion, owing to the existence of organopolysiloxanes, as above-described, resulting in curtailment of residual strain, thereby inhibiting rupture due to bending or folding stress and that when bending or folding stress is imposed on the hinge portion, shear and slip between each other molecules occurs under the action of organopolysiloxanes, which absorbs such stress, thereby forestalling fracturing, and so forth.

(Preferred Embodiment)

In the following, this invention is described with reference to its preferred embodiment, but its application is not limited thereto.

The hinge characteristic was evaluated to the under-mentioned standards with the test piece molded in the shape shown in FIG. 1.

Number of samples : n = 10

Test method : After leaving the sample for 24 hr or longer in an environment held at 23°C and 50%RH, repetitively fold its hinge portion 100 times for an angle of 180 degrees (90 degrees upward and downward, respectively) under the same conditions.

Evaluation A : Number of hinge portions broken during 100 times folding.

Evaluation B : Evaluate the state of hinge portion after undergoing 100 times folding to the undermentioned judgment standards and score the result by average point.

  0 : The portion fractured.
  1 : The portion about to be cut after cracked.
  2 : The hinge portion thinned, with surface layer only left contiguous.
  3 : The hinge portion with cracks grown large.

4 : The hinge portion on which minute cracks are observed.

5 : The hinge part whitened.

Examples 1-13 and Comparison Examples 1-2

After adding various types of organopolysiloxanes shown in Table 1 to polybutylene terephthalate resin (trade name "Juranex", manufactured by Polyplastics Co., Ltd.), to be mixed therewith, the mixtures were fused and kneaded, to prepare pellet shape compositions, using 30mm ID two axis extruder. With this pellet, a hinged test piece of the shape as shown in FIG. 1 and standard test pieces for measurement of various properties were molded and the hinge characteristic and other characteristics were measured therewith. The measuring methods of general properties were specified in accordance with the methods of ASTM Specifications. Besides, for comparison, resins without the addition of organopolysiloxanes were evaluated by the similar method.

The results shown in Table 1 clearly susgests that the addition of organopolysiloxanes has a remarkable effect on the improvement in the hinge characteristic.

Table 1

| | | Composition | | | | Hinge characteristic | | Melt (3) index (g/10min) | Tension | | Modulus of bending elasticity (kg/cm²) | Impact strength of notch bar (kg·cm/cm) | Moldability |
|---|---|---|---|---|---|---|---|---|---|---|---|---|---|
| | | Resin | Concentration (wt,%) | Additive | Concentration (wt,%) | Evaluation A | Evaluation B | | Strength (kg/cm²) | Elongation (%) | | | |
| Examples | 1 | PBT(1) Resin A | 98.0 | Dimethyl polysiloxane 60000cSt | 2.0 | 0 | 3.2 | 48.2 | 468 | 142 | 24100 | 3.7 | Good |
| | 2 | " | 95.0 | " | 5.0 | 0 | 4.4 | 51.6 | 425 | 200< | 22400 | 3.9 | " |
| | 3 | PBT(2) Resin B | 98.0 | Dimethyl polysiloxane 100cSt | 2.0 | 0 | 3.7 | 17.2 | 482 | 200< | 24000 | 4.1 | Improper thrust |
| | 4 | " | " | Dimethyl polysiloxane 3000cSt | " | 0 | 4.1 | 17.5 | 485 | 200< | 23900 | 4.0 | Good |
| | 5 | " | " | Dimethyl polysiloxane 12500cSt | " | 0 | 4.2 | 16.7 | 475 | 200< | 24300 | 4.3 | " |
| | 6 | " | 99.5 | Dimethyl polysiloxane 60000cSt | 0.5 | 2 | 2.0 | 16.8 | 547 | 200< | 25600 | 3.3 | " |
| | 7 | " | 98.0 | " | 2.0 | 0 | 4.0 | 16.9 | 477 | 200< | 24200 | 4.5 | " |
| | 8 | " | 95.0 | " | 5.0 | 0 | 4.7 | 17.5 | 436 | 200< | 21900 | 4.7 | " |
| | 9 | " | 85.0 | " | 15.0 | 0 | 4.8 | 18.1 | 402 | 200< | 19800 | 5.3 | " |
| | 10 | | 98.0 | Phenyl methyl polysiloxane 1000cSt | 2.0 | 0 | 3.8 | 17.1 | 486 | 200< | 24100 | 4.1 | Somewhat improper thrust |
| | 11 | " | " | Alkylallyl-denatured polysiloxane 1400cSt | " | 0 | 3.5 | 17.2 | 473 | 200< | 24400 | 4.0 | " |
| | 12 | " | " | Fluorine-denatured polysiloxane 10000cSt | " | 0 | 4.0 | 16.9 | 474 | 200< | 24200 | 4.2 | Good |
| | 13 | " | " | Polyether-denatured siloxane 1300cSt | " | 0 | 3.2 | 16.5 | 492 | 200< | 24300 | 3.9 | Somewhat improper thrust |
| Comparison Examples | 1 | PBT(1) Resin A | 100 | – | | 8 | 0.3 | 49.1 | 569 | 38 | 26000 | 2.9 | Good |
| | 2 | PBT(2) Resin B | 100 | – | | 4 | 0.8 | 16.6 | 583 | 200< | 26200 | 3.1 | " |

Note (1) "DURANEX 2000" Manufactured by Polyplastics Co., Ltd.　(3) Measurements were taken at a temperature of 235°C
(2) "DURANEX 2002" Manufactured by Polyplastics Co., Ltd.　and under a load of 2160g.

EP 0 242 037 B1

Examples 14-22 and Comparison Examples 3-4

Tests were made by the similar methods, using polyacetal resin (trade name "DURACON", manufactured by Polyplastics Co., Ltd.) and polyamide resin (trade name "POLYPLANYLON 66", manufactured by Polyplastics Co., Ltd.).

The results shown in Table 2 indicates that notable improvements in the hinge characteristic were recognized also in these cases.

EP 0 242 037 B1

Table 2

| | | Composition | | | Hinge characteristic | | Melt (3) index (g/10 min) | Tension | | Modulus of bending elasticity (kg/cm²) | Impact strength of notch bar (kg·cm/cm) | Moldability |
|---|---|---|---|---|---|---|---|---|---|---|---|---|
| | | Resin Concentration(st,%) | Additive | Concentration(wt,%) | Evaluation A | Evaluation B | | Strength (kg/cm²) | Elongation(%) | | | |
| Examples | 14 | Polyacetal resin(1) 98.0 | Dimethyl polysiloxane 3000cSt | 2.0 | 4 | 1.5 | 9.2 | 518 | 147 | 23000 | 6.5 | Good |
| | 15 | " 98.0 | Dimethyl polysiloxane 60000cSt | 2.0 | 3 | 2.0 | 9.1 | 523 | 156 | 23200 | 6.8 | " |
| | 16 | " 95.0 | " | 5.0 | 1 | 3.1 | 9.4 | 470 | 200< | 22100 | 7.2 | " |
| | 17 | " 80.0 | " | 20.0 | 0 | 4.2 | 9.7 | 415 | 200< | 19200 | 8.0 | Rather poor |
| | 18 | " 98.0 | Phenyl methyl polysiloxane 1000cSt | 2.0 | 4 | 1.4 | 9.3 | 518 | 142 | 22800 | 6.5 | " |
| | 19 | " " | Polyether-denatured siloxane 1300cSt | 2.0 | 3 | 1.7 | 9.4 | 527 | 135 | 23200 | 6.7 | " |
| | 20 | Polyamide resin 98.0 | Dimethyl polysiloxane 3000cSt | 2.0 | 0 | 4.9 | - | 684 | 200< | 24200 | 6.3 | Good |
| | 21 | " " | Dimethyl polysiloxane 60000cSt | 2.0 | 0 | 5.0 | - | 692 | 200< | 24500 | 6.2 | " |
| | 22 | " " | Fluorine-denatured polysiloxane 10000cSt | " | 0 | 4.9 | - | 685 | 200< | 24200 | 6.4 | " |
| Comparison Example | 3 | Polyacetal resin (1) 100 | - | | 10 | 0 | 9.2 | 627 | 68 | 26100 | 6.0 | " |
| | 4 | Polyamide resin (2) 100 | - | | 0 | 4.1 | - | 822 | 65 | 29400 | 5.2 | " |

Note (1) "DURACON" Manufactured by Polyplastics Co., Ltd.  (3) Measurements were taken at a temperature of 235°C
     (2) "DURACON" Manufactured by Polyplastics Co., Ltd.      and under a load of 2160g.

## Claims

1. A hinge part comprising first and second elements and a thin portion therebetween subjected to a bending or folding load, said first and second elements and thin portion being formed of a thermoplastic resin, characterized in that the hinge part comprises in addition one or more organopolysiloxanes each having a viscosity of $5 \times 10^{-7}$ to $1\ m^2/s$ (0.5 to 1,000,000 cSt), said organopolysiloxane(s) being present in a total weight of 0.05 to 30% by weight based on the weight of resin plus organopolysiloxane(s).

2. A hinge part as claimed in claim 1, in which the thermoplastic resin is a polyester.

3. A hinge part as claimed in claim 1, in which the thermoplastic resin is a polyamide.

4. A hinge part as claimed in claim 1, in which the thermoplastic resin is a polyacetal.

5. A hinge part as claimed in any preceding claim, in which the total weight of organopolysiloxane(s) is 0.3 to 10% by weight, based on the weight of the composition.

6. A hinge part as claimed in any preceding claim, in which the viscosity of the organopolysiloxane(s) is $5 \times 10^{-4}$ to $1\ m^2/s$ (500 to 1,000,000 cSt).

7. A process for forming a hinge part as claimed in any preceding claim, in which the respective components of the composition are first mixed, the mixture is kneaded into and extruded into an extruder so as to produce pellets and the pellets are then molded.

8. A process as claimed in claim 7, in which the components of the mixture are fused and kneaded, to prepare pellets, using a 30mm ID two-axis extruder.

9. A process as claimed in claim 7, in which pellets differing in composition are first prepared and then mixed during the molding so as to yield a mold of mixed composition.

10. A process as claimed in claim 7, in which the respective components are charged directly into the mold, to be molded at the time of molding.

## Ansprüche

1. Scharnierteil, umfassend ein erstes Element und ein zweites Element und ein dünnes Teilstück zwischen diesen, das einer Biege- oder Knickbelastung ausgesetzt ist, wobei das erste und das zweite Element und das dünne Teilstück aus einem thermoplastischen Harz gebildet werden, dadurch gekennzeichnet, daß das Scharnierteil zusätzlich ein oder mehrere Organopolysiloxane umfaßt, die jeweils eine Viskosität von $5 \times 10^{-7}$ bis $1\ m^2/s$ (0,5 bis 1 000 000 cSt) haben, wobei das (die) Organopolysiloxan(e) in einer Gesamtgewichtsmenge von 0,05 bis 30 Gew.-%, bezogen auf das Gewicht von Harz plus Organopolysiloxan(en), vorhanden ist.

2. Scharnierteil nach Anspruch 1, worin das thermoplastische Harz ein Polyester ist.

3. Scharnierteil nach Anspruch 1, worin das thermoplastische Harz ein Polyamid ist.

4. Scharnierteil nach Anspruch 1, worin das thermoplastische Harz ein Polyacetal ist.

5. Scharnierteil nach irgendeinem vorhergehenden Anspruch, worin die Gesamtgewichtsmenge des Organopolysiloxans (der Organopolysiloxane) 0,3 bis 10 Gew.-%, bezogen auf das Gewicht der Zusammensetzung, beträgt.

6. Scharnierteil nach irgendeinem vorhergehenden Anspruch, worin die Viskosität des Organopolysiloxans (der Organopolysiloxane) $5 \times 10^{-4}$ bis $1\ m^2/s$ (500 bis 1 000 000 cSt) beträgt.

7. Verfahren zur Bildung eines Scharnierteils nach irgendeinem vorhergehenden Anspruch, worin die jeweiligen Komponenten der Zusammensetzung zunächst vermischt werden, die Mischung in einen Extruder hinein geknetet und dann aus diesem extrudiert wird, wodurch Granulat erzeugt wird, und das Granulat dann geformt wird.

8. Verfahren nach Anspruch 7, worin die Komponenten der Mischung zur Herstellung des Granulats unter Einsatz eines zweiachsigen Extruders mit einem Innendurchmesser von 30 mm geschmolzen und geknetet werden.

9. Verfahren nach Anspruch 7, worin zuerst Granulate unterschiedlicher Zusammensetzung hergestellt und dann während des Formens vermischt werden, wodurch ein Formteil einer Mischzusammensetzung erhalten wird.

10. Verfahren nach Anspruch 7, worin die jeweiligen Komponenten direkt in die Form eingefüllt werden, um zur Zeit des Formens geformt zu werden.

**Revendications**

1. Une pièce articulée comprenant des premier et second éléments et, entre eux, une partie mince soumise à une charge de flexion ou de pliage, lesdits premier et second éléments et la partie mince étant formés d'une résine thermoplastique, caractérisée en ce que la partie mince comprend, de plus, un ou plusieurs organopolysiloxanes ayant chacun une viscosité de $5 \times 10^{-7}$ à $1$ m$^2$/s ($0,5$ à $1\,000\,000$ cSt), ledit ou lesdits organopolysiloxanes étant présents en un poids total de $0,05$ à $30\%$ en poids, par rapport au poids total de la résine et du ou des organopolysiloxanes.

2. Une pièce articulée telle que revendiquée dans la revendication 1, dans laquelle la résine thermoplastique est un polyester.

3. Une pièce articulée telle que revendiquée dans la revendication 1, dans laquelle la résine thermoplastique est un polyamide.

4. Une pièce articulée telle que revendiquée dans la revendication 1, dans laquelle la résine thermoplastique est un polyacétal.

5. Une pièce articulée telle que revendiquée dans l'une quelconque des revendications précédentes, dans laquelle le poids total du ou des organopolysiloxanes est de $0,3$ à $10\%$ en poids, par rapport au poids de la composition.

6. Une pièce articulée telle que revendiquée dans l'une quelconque des revendications précédentes, dans laquelle la viscosité du ou des organopolysiloxanes est de $5 \times 10^{-4}$ à $1$ m$^2$/s ($500$ à $1\,000\,000$ cSt).

7. Un procédé pour former une pièce articulée telle que revendiquée dans l'une quelconque des revendications précédentes, dans lequel les constituants respectifs de la composition sont tout d'abord mélangés, le mélange est malaxé et extrudé dans une extrudeuse de manière à produire des granulés et les granulés sont ensuite moulés.

8. Un procédé tel que revendiqué dans la revendication 7, dans lequel les constituants du mélange sont fondus et malaxés, pour préparer des granulés, en utilisant une extrudeuse à deux axes de $30$ mm de diamètre interne.

9. Un procédé tel que revendiqué dans la revendication 7, dans lequel des granulés de compositions différentes sont tout d'abord préparés, puis mélangés pendant le moulage de manière à produire une pièce moulée de composition mixte.

10. Un procédé tel que revendiqué dans la revendication 7, dans lequel les constituants respecticfs sont introduits directement dans le moule, pour être moulés au moment du moulage.

Fig.1(a)

27

1

Fig.1(b)

15

7

Fig.1(c)

0.35

1

1.5    2.5

4.0